Europäisches Patentamt

European Patent Office

Office européen des brevets

(19)

(11) Veröffentlichungsnummer: **0 173 077**
**B1**

(12) **EUROPÄISCHE PATENTSCHRIFT**

(45) Veröffentlichungstag der Patentschrift: **13.06.90**

(21) Anmeldenummer: **85109303.9**

(22) Anmeldetag: **24.07.85**

(51) Int. Cl.⁵: **H 02 P 9/12, H 02 P 7/14**

(54) **Anordnung zur Wechselstromspeisung eines Gleichstromzugantriebs im Fahr- und Nutzbremsbetrieb.**

(30) Priorität: **27.07.84 BG 66417/84**

(43) Veröffentlichungstag der Anmeldung:
**05.03.86 Patentblatt 86/10**

(45) Bekanntmachung des Hinweises auf die
Patenterteilung:
**13.06.90 Patentblatt 90/24**

(84) Benannte Vertragsstaaten:
**AT CH DE FR LI SE**

(56) Entgegenhaltungen:
**DE-A-1 538 293**
**US-A-4 136 305**

**IEEE TRANSACTIONS ON INDUSTRY
APPLICATIONS, Band IA-10, Nr. 1,
Januar/Februar 1974, Seiten 123-127; T.
MAKINO et al.: "On the regenerative braking of
DC motors with AC supply"**

(73) Patentinhaber: **S O "BULGARSKI DARJAVNI
JELESNIZI"**
**Ivan Vasov Strasse 3**
**Sofia (BG)**

(72) Erfinder: **Staikov, Georgi Todorov, Dipl.-Ing.**
**Losenez-Strasse 1**
**Sofia (BG)**
Erfinder: **Borschukov, Enyu Georgiev, Dipl.-Ing.**
**Boul. Bulgarien 124**
**Sofia (BG)**
Erfinder: **Stefanov, Swetoslav Alexandrov, Dipl.-
Ing.**
**Ivaz Voivoda Strasse 27**
**Sofia (BG)**
Erfinder: **Ganov, Milko Makaveev, Dipl.-Ing.**
**San Stefano-Strasse 4**
**Sofia (BG)**
Erfinder: **Matov, Peter Ivanov**
**Quartal Studentski Grad Block 16**
**Sofia (BG)**
Erfinder: **Popov, Rumen Yordanov, Dipl.-Ing.**
**Oborischte-Strasse**
**Sofia (BG)**
Erfinder: **Dolaptschiev, Ivailo Dragomirov, Dipl.-
Ing.**
**22 Septemvri-Strasse 8**
**Sofia (BG)**

Courier Press, Leamington Spa, England.

# EP 0 173 077 B1

(74) Vertreter: Ebbinghaus, Dieter et al
v. FÜNER, EBBINGHAUS, FINCK Patentanwälte
European Patent Attorneys Mariahilfplatz 2 & 3
D-8000 München 90 (DE)

**Beschreibung**

Die Erfindung bezieht sich auf eine Anordnung zur Wechselstromspeisung eines mit einer Ausgleichsdrossel versehenen Gleichstrom-Zugantriebs im Fahr- und Nutzbremsbetrieb gemäß dem Oberbegriff des Patentanspruchs. Eine solche Anordnung ist aus Kapustin, L. D., Kopanew, A. S., Losanowski, A. L., Ossobennosti ustrojstwa i exploitazii elektrowoza WL 80ᴾ, Moskau, "Transport", bekannt.

Bei der bekannten Anordnung ist der Leistungsfaktor $\lambda = \cos\varphi \cdot v$ im Nutzbremsbetrieb verhältnismäßig gering, da infolge der Kommutation der Thyristoren Spannung und Strom des Transformators natürlichermaßen nicht in Phase sind. Die Phasenverschiebung wird noch vergrößert durch die Phasensteuerung bei großen Öffnungswinkel, d.h. Veränderung des Steuerwinkels über die Halbperiode der Wechselspannung, und die Krümmung der Strom- und Spannungsform des Transformators, die durch den Ausgleich des Stroms der Zugantriebe verursacht werden. Dies fürt zu einem erhöhten Verbrauch von Blindleistung. Hierdurch nehmen die Verluste im Speisenetz zu, die Hauptbestandteile der Schaltung werden stärker erwärmt, so daß der Wirkungsgrad im Nutzbremsbetrieb verringert wird. Die Nachteile der bekannten Anordnung im Nutzbremsbetrieb begrenzen die Verbreitung elektrischer Bahnen mit wechselstromgespeistem Gleichstromantrieb mit Nutzbremsbetrieb.

Der Erfindung liegt die Aufgabe zugrunde, eine Anordnung zur Wechselstromspeisung eines Gleichstrom-Zugantriebs zu schaffen, bei dem der Leistungsfaktor im gesamten Bereich des Nutzbremsbetriebes vergrößert und der Verbrauch an Blindleistung vermindert ist.

Die erfindungsgemäße Anordnung enthält einen die Fahrdrahtspannung reduzierenden Transformator, dessen Sekundärwicklung mit einem voll steuerbaren thyristorisierten Brücken-Umrichter verbunden ist, an den der Zugantrieb bzw. Zugantriebe und Ausgleichsdrosseln angeschlossen sind. Der Umrichter ist über einen Leistungsschalter mit einem Zwangskommutierungsblock verbunden, der einen Kondensator aufwiest, der über die im Generatorbetrieb arbeitenden Zugantriebe umgeladen wird. Die Steuerelektroden der Thyristoren des Umrichters sind an getrennte Steuerblöcke angeschlossen, von denen die eine zur Steuerung des Zugoder Fahrbetriebs und der andere zur Steuerung des Nutzbremsbetriebs dient. Die Steuerelektroden der Thyristoren des Zwangskommutierungsblockes sind an einen gentrennten Steuerblock zur Steuerung der Zwangskommutierung angeschlossen. Die Steuerung der drei Steuerblöcke der Thyristoren erfolgt aus einem Hauptsteuerblock, der auch den den Umrichter und den Zwangskommutierungsblock trennenden Leistungsschalter steuert. Einer Informationsverarbeitungseinrichtung werden Signale vom Transformator und von den Zugantrieben zugeführt, die sie an den Hauptsteuerblock weitergibt.

Dabei ist aus der DE—A—1 538 293 eine Anordnung zur Wechselstromspeisung gemäß dem Oberbegriff des Patentanspruchs bekannt, die ebenfalls einen dem Umrichter zuschaltbaren Zwangskommutierungsblock aufweist. Diese bekannte Anordnung wird jedoch anders gesteuert als die erfindungsgemäße.

Im Vergleich zu der eingangs erwähnten bekannten gestattet die erfindungsgemäße Anordnung einen Nutzbremsbetrieb mit hohen Werten des Leistungsfaktor $\lambda$. Daher werden die Verluste im Speisenetz bedeutend vermindert, die Erwärmung der Hauptbestandteile der Anordnung wird vermindert, und es läßt sich bei Nutzbremsung mehr Energie rückgewinnen. Gleichzeitig sinkt die Spannung am Stromabnehmer anderer, im gleichen Bereich befindlicher Zugeinheiten nicht ab.

Die Verwendung nur eines Kondensators gestattet die Vereinfachung der Steuerung, eine Verminderung der Anzahl der Elemente der Schaltung, geringere Abmessungen und geringeres Eigengewicht der Bestandteile der Speise- und der Zugantriebsanordnung und die Möglichkeit der Verwendung von Elementen mit großer Regenerierzeit. Dies bietet die Möglichkeit, die Einrichtung mit einer geringen Anzahl von Thyristorelementen auszuführen.

Eine bevorzugte Weiterbildung der erfindungsgemäßen Anordnung ist Gegenstand des Patentanspruchs 2.

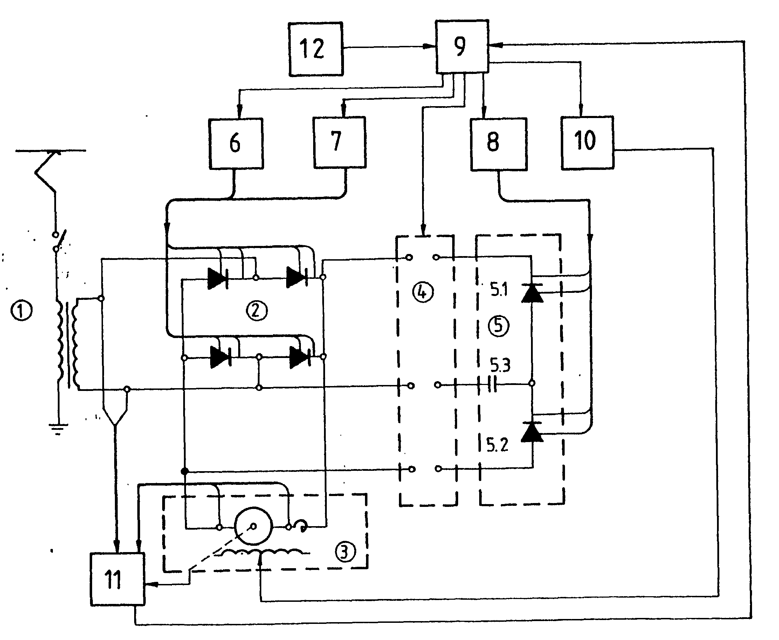

Ein Ausführungsbeispiel der erfindungsgemäßen Anordnung wird anhand der Zeichnung erläutert.

Die Anordnung besteht aus einem die Fahrdrahtspannung reduzierenden Transformator 1, einem Thyristor-Brücken-Umrichter 2 und einem an dessen Gleichstromseite angeschlossenen Zugantrieb 3, der mit Ausgleichsdrosseln versehen ist. Der Umrichter 2 ist über einen Leistungsschalter 4 mit einem Zwangskommutierungsblock 5 verbunden. Der Umrichter ist im normalen Fahrbetrieb mit einem Fahrbetriebs-Steuerblock 6 und im Nutzbremsbetrieb mit einem Nutzbremsbetriebs-Steuerblock 7 verbunden. Der Zwangskommutierungsblock 5 ist an einen Zwangskommutierungs-Steuerblock 8 angeschlossen. Die drei Steuerblöcke 6, 7 und 8 sind mit einem Hauptsteuerblock 9 verbunden, der seinerseits mit dem Leistungsschalter 4 und einer Erregungssteuerung 10 für den Zugantrieb 3 verbunden ist. Die Sekundärseite des Transformators 1 und die Informationsausgänge (EMK und Drehzahl) der Zugantriebe 3 sind mit einem Informationsverarbeitungsblock 11 verbunden, dessen Ausgang an den Hauptsteuerblock 9 angeschlossen ist.

Der Zwangskommutierungsblock 5 besteht aus kommutierenden Thyristoren 5.1 und 5.2 und einem kommutierenden Kondensator 5.3. Über den Leistungsschalter 4 ist der kommutierende Thyristor 5.1 mit der Plusschiene und der kommutierende Thyristor 5.2 mit der Minusschiene des Umrichters 2 verbunden. Die eine Seite des kommutierenden Kondensators 5.3 ist zu dem gemeinsamen Punkt zwischen den zwei Zweigen des Umrichters 2 geführt, die als Nullventile arbeiten, d.h. während derjenigen Intervalle den Motorstromkreis schließen, während denen über die Transformatorwicklung kein Strom fließt.

Die erfindungsgemäße Anordnung arbeitet folgendermaßen:

Im Fahrbetrieb wird auf den vom Zugführer über das Steuerpult 12 gegebenen Befehl über den Hauptsteuerblock 9 der Thyristor-Umrichter 2 vom Steuerblock 6 als Gleichrichter gesteuert, bis der vorgegebene Fahrzustand erreicht ist. Die Spannung an den Zugantrieben bzw. Fahrmotoren 3 wird mit natürlicher Kommutierung der Thyristoren phasengeregelt, da der Leistungsschalter 4 für den Zwangskommutierungsblock 5 ausgeschaltet ist. Der Hauptsteuerblock 9 vergleicht den vom Steuerpult 12 vorgegebenen Sollwert mit der elektromotorischen Kraft (EMK) des Zugantriebes 3 und die Bewegungsgeschwindigkeit, die ihm vom Informationsverarbeitungsblock 11 zugeleitet werden. Bei Erreichen der vorgegebenen Zugkraft wird der Phasenwinkel vom Fahrbetriebs-Steuerblock 6 nicht weiter verändert. Die Erregung der Zugantriebe wird von der Erregungssteuerung 10 gesteuert.

Im Nutzbremsbetrieb wird anfänglich auf das vom Steuerpult 12 gegebene Signal vom Hauptsteuerblock 9 ein Signal zur Einschaltung des Leistungsschalters 4 gegeben, wodurch der Zwangskommutierungsblock 5 zum Thyristor-Brücken-Umrichter 2 zugeschaltet wird. Bei Vorgabe einer bestimmten Bremscharakteristik durch den Zugführer gibt der Hauptsteuerblock 9 über das Steuerpult 12 zum Nutzbremsbetriebs-Steuerblock 7, zum Zwangskommutierungs-Steuerblock 8 und zur Erregungssteuerung 10 Signale durch. Der Nutzbremsbetriebs-Steuerblock 7 steuert die Thyristoren des Umrichters 2 und der Zwangskommutierungs-Steuerblock 8 die des Zwangskommutierungsblocks 5. Die von den Zugantrieben 3 erzeugte Energie wird über den als Wechselrichter arbeitenden Umrichter 2 dem Transformator 1 zugeleitet. Da der Kommutierungs-Leistungsschalter 4 eingeschaltet und der Zwangskommutierungsblock 5 an den Umrichter 2 angeschlossen ist, erfolgt eine Phasenregulierung auf der vorderen und hinteren Front der Spannungs-Sektorenregelung der Spannung. Die Informationsverarbeitungseinrichtung 11 verarbeitet die Sekundärspannung des Transformators 1, die EMK des Antriebs 3 und die Bewegungsgeschwindigkeit der Lok und führt dem Hauptsteuerblock 9 ein Signal zu. Bei Erreichen der Vorgabe wird der Winkel auf der vorderen und hinteren Front der Spannung durch den Hauptsteuerblock 9 nicht weiter verändert.

Der durchschnittliche Leistungskoeffizient bei Nutzbremsbetrieb eines elektrischen Zuges liegt bei der bekannten Anordnung zwischen 0,5 und 0,6. Bei der erfindungsgemäßen Anordnung beträgt der durchschnittliche Leistungskoeffizient mehr als 0,85.

## Patentanspruch

Anordnung zur Wechselstromspeisung eines mit einer Ausgleichsdrossel versehenen Gleichstrom-Zugantriebs (3) im Fahr- und Nutzbremsbetrieb,

mit einem über einen Reduziertransformator (1) an den Stromabnehmer angeschlossenen, vollgesteuerten Thyristor-Brücken-Umrichter (2),

mit einem vom Fahrpult (12) steuerbaren Hauptsteuerblock (9),

mit einem Fahrbetriebs- und einem Nutzbremsbetriebs-Steuerblock (6 bzw. 7), die an die Steuerelektroden der Thyristoren des Umrichters (2) angeschlossen sind,

mit einem Informationsverarbeitungsblock (11) und

mit einer an den Zugantrieb (3) angeschlossenen Erregungssteuerung (10), gekennzeichnet

durch einen im Nutzbremsbetrieb dem Umrichter (2) zuschaltbaren Zwangskommutierungsblock (5), dessen Steuereingang an den Hauptsteuerblock (9) angeschlossen ist, und der im Nutzbremsbetrieb über einen Kondensator (5.3) an einen Wechselstromanschluß des Umrichters (2) angeschlossen ist und dessen Thyristoren (5.1, 5.2) gleichsinnig mit denen des Umrichters (2) an dessen Gleichspannungsseite angeschlossen sind, und

durch einen an die Steuerelektroden der Thyristoren des Zwangskommutierungsblocks (5) angeschlossenen Zwangskommutierungs-Steuerblock (8),

wobei die Ausgänge des Hauptsteuerblockes (9) je an den Eingang des Fahrbetriebs-, des Nutzbremsbetriebs-, des Zwangskommutierungs-Steuerblockes bzw. der Erregungssteuerung (6, 7, 8, 10) und ein Eingang des Hauptsteuerblockes (9) an einen Ausgang des Informationsverarbeitungsblockes (11) angeschlossen sind.

## Revendication

Dispositif pour alimenter en courant alternatif un dispositif de traction ferroviaire à courant continu (3) comportant une bobine de compensation, lors d'un fonctionnement en traction et d'un fonctionnement en freinage à récupération, comportant

un convertisseur double alternance (2) formé d'un pont de thyristors, et raccordé au pantographe par l'intermédiaire d'un transformateur réducteur (1),

un bloc de commande principale (9) pouvant être commandé à partir du pupitre de conduite (12),

un bloc de commande de fonctionnement en traction et un bloc de commande de fonctionnement en freinage à récupération (6 resp. 7) qui sont raccordés aux électrodes de commande des thyristors du convertisseur statique (2),

un bloc (11) de traitement des informations, et une commande d'excitation (10) raccordée au dispositif de traction ferroviaire (3), caractérisé par un bloc de commutation forcée (5) qui peut être raccordé de façon additionnelle au convertisseur statique (2) pendant le fonctionnement en freinage à récupération, dont l'entrée de commande est raccordée au bloc de commande principale (9), qui est raccordé par l'intermédiaire d'un condensateur (5.3) à une borne à courant alternatif du convertisseur statique (2) lors du fonctionnement en freinage à récupération et dont les thyristors (5.1, 5.2) sont raccordés, dans le même sens que ceux du convertisseur statique (2), au côté à tension continue de ce dernier, et

par un bloc de commande de commutation forcée (8) raccordé aux électrodes de commande des thyristors du bloc de commutation forcée (5),

les sorties du bloc de commande principale (9) étant raccordées respectivement à l'entrée du bloc de commande de fonctionnement en traction, du bloc de commande de fonctionnement en freinage à récupération, du bloc de commande de commutation forcée ou de la commande d'excitation (6, 7, 8, 10), et une entrée du bloc de commande principale (9) étant raccordée à une sortie du bloc (11) de traitement des informations.

**Claim** .

Apparatus for feeding an alternating current to a direct current traction device (3) equipped with a balance coil at powering operation and regenerative operation comprising:
a completely-controlled thyristor-bridge-converter (2) connected with the pantograph by a reduction transformer (1)
a main control block (9) controllable from the control board
a powering and a regenerative operation control block (6 or 7) connected to the control electrodes of the thyristors of the converter (2)
comprising a data processing block (11) and
comprising an excitation control mechanism (10) characterized
by a forcedly commutating block (5) the control input whereof is connected to the main control block (9) and which may be connected to the converter (2) during regenerative operation, which commutating block during regenerative operation is connected to an alternating current terminal of the converter (2) through a capacitor (5.3), the thyristors (5.1, 5.2) whereof are equidirectionally connected to those of the converter (2) at the d.c. current side thereof and
by a forcedly commutating control block (8) connected to the control electrodes of the thyristors of the forcedly commutating block (5),
wherein the outputs of the main control block (9) are connected to an input of the main control, regenerative operation, forcedly commutating and excitation control blocks (6, 7, 8, 10), respectively, and an input of the main control block (9) is connected to an output of the data processing block (11).